# EUROPÄISCHE PATENTANMELDUNG

(11) **EP 0 638 979 A2**
(43) Veröffentlichungstag der Anmeldung: **15.02.1995**
(21) Anmeldenummer: 94108756.1
(22) Anmeldetag: 08.06.1994
(51) Int. Cl.: H02J 9/00

(54) **Netzteil mit einer Überwachungsschaltung**

(30) Priorität: 13.08.1993 CH 2408/93
(71) Anmelder: Landis & Gyr Business Support AG, CH-6301 Zug (CH)
(72) Erfinder: Reichert, Peter, Dipl.-Ing., D-63526 Erlensee (DE)
(74) Vertreter: EGLI-EUROPEAN PATENT ATTORNEYS

(57) **Zusammenfassung**

Ein Netzteil mit einer Ueberwachungsschaltung zur Detektion von langdauernden Netzausfällen besteht aus einem Netztransformator (2), einem Gleichrichter (1) zur Erzeugung einer ungeregelten Gleichspannung, einer ersten integrierten Schaltung (6) zur Erzeugung und Regelung einer Ausgangsgleichspannung und einer zweiten integrierten Schaltung (8) zur Erzeugung eines Netzunterbruchsignales bei der Detektion eines langdauernden Netzausfalles aufgrund der Ueberwachung der ungeregelten Gleichspannung durch Vergleich mit einer Referenzspannung. Dabei wird die Referenzspannung von der Ausgangsgleichspannung abgeleitet. Die zweite integrierte Schaltung (8) ist ein Komparator mit Hysterese. Die Vorteile bestehen darin, dass eine verbesserte elektromagnetische Verträglichkeit (EMV) und durch den Einsatz von Standardkomponenten ein kostengünstigerer Aufbau erreicht werden.

## Beschreibung

Die Erfindung betrifft ein Netzteil mit einer Ueberwachungsschaltung zur Detektion von langdauernden Netzausfällen gemäss dem Oberbegriff des Patentanspruches 1.

Bei netzversorgten, mikrocomputergesteuerten Systemen besteht vielfach die Bedingung, dass im Arbeitsspeicher des Mikroprozessors vorhandene Betriebsdaten im Falle von Netzunterbrüchen nicht verloren gehen dürfen. Netzteile, die der Stromversorgung von Mikrocomputersystemen dienen, sind deshalb vielfach mit Schaltungen zur Erkennung von Netzunterbrüchen ausgerüstet, die ein Netzunterbruchsignal erzeugen, bei dessen Erscheinen die im Arbeitsspeicher des Mikroprozessors vorhandenen Betriebsdaten noch vor dem Zusammenbruch der Speisespannung in nichtflüchtige Speicher, beispielsweise EEPROMs (electrically erasable programmable read only memories) geschrieben werden.

Netzteile dieser Art sind häufig so gebaut, dass sie eine Ausgangsgleichspannung zur Speisung des Mikrocomputersystems während einer begrenzten Zeit nach einem Netzunterbruch noch liefern können, wobei das Netzunterbruchsignal erst kurz vor dem Zusammenbruch der Ausgangsgleichspannung erzeugt wird. Der Grund dafür, mit der Erzeugung des Netzunterbruchsignales zuzuwarten, liegt darin, dass EEPROMs nur mit einer begrenzten Zahl von Schreib- und Lesezyklen zuverlässig betrieben werden können, und dass man deshalb bestrebt ist, die Zahl der Schreib- und Lesezyklen möglichst klein zu halten. Da kurzzeitige Netzunterbrüche im allgemeinen häufiger auftreten als langdauernde Netzunterbrüche, wäre es unerwünscht und nachteilig, wenn die häufiger auftretenden und überbrückbaren kurzzeitigen Netzunterbrüche den Abspeichervorgang zur Sicherung der Betriebsdaten jedesmal bereits auslösen könnten. Dies würde nicht nur den normalen Programmablauf stören, sondern auch unnötigerweise die Lebensdauer der EEPROMs vermindern.

Das im Handel erhältliche Netzteil 2 des Typs WSC der Firma Landis & Gyr mit einer Ueberwachungsschaltung zur Detektion von langdauernden Netzausfällen weist einen Netztransformator, einen Gleichrichter zur Erzeugung einer ungeregelten Gleichspannung und eine integrierte Schaltung zur Erzeugung und Regelung einer Ausgangsgleichspannung sowie zur Erzeugung eines Netzunterbruchsignales bei einem langdauernden Netzausfall auf. Die integrierte Schaltung ist ein Dual Mode™ 5V/programmable Micropower Voltage Regulator vom Typ MAX666 der Firma Maxim Integrated Products. Dieses Netzteil hat den Nachteil, dass es eine relativ geringe elekro-magnetische Verträglichkeit (EMV) gegenüber elektrischen Störsignalen aufweist.

Die Aufgabe besteht darin, ein Netzteil mit einer Ueberwachungsschaltung zur Detektion von langdauernden Netzausfällen anzugeben, das unempfindlicher gegenüber elektrischen Störsignalen ist.

Diese Aufgabe wird durch die im Kennzeichen des Patentanspruches 1 gegebene Lehre gelöst.

Die Vorteile der Erfindung bestehen darin, dass eine verbesserte elektro-magnetische Verträglichkeit (EMV) und durch den Einsatz von Standardkomponenten eine kostengünstigere Bauweise erreicht werden.

Ein Ausführungsbeispiel wird im folgenden anhand einer einzigen Zeichnung näher erläutert.

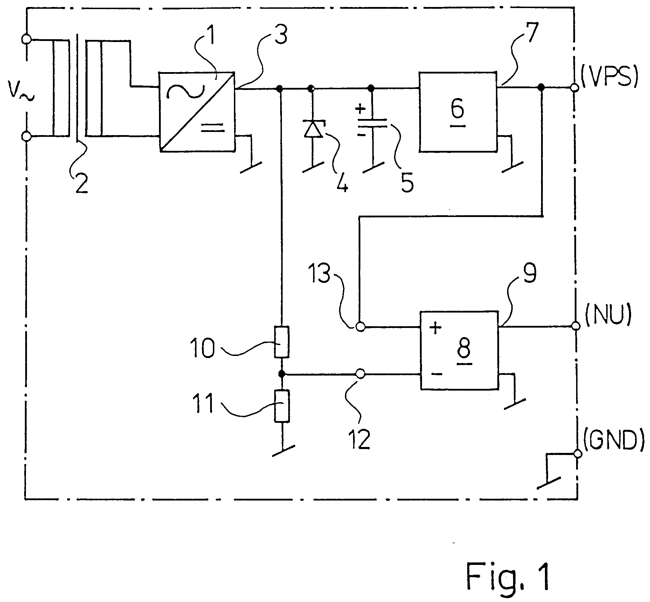

Figur 1 zeigt ein Netzteil mit einer Ueberwachungsschaltung zur Detektion von langdauernden Netzausfällen.

Ein Gleichrichter 1 wird von einem Netztransformator 2 mit einer Wechselspannung V_{∼} gespeist, die z.B. 230 Volt oder 24 Volt betragen kann, und erzeugt an einem Gleichrichterausgang 3 eine ungeregelte Gleichspannung, die über eine Zenerdiode 4 zur Spannungsbegrenzung und Glättungskondensatoren 5 einer ersten integrierten Schaltung 6 zur Erzeugung und Regelung einer Ausgangsgleichspannung zugeführt wird. Die Ausgangsgleichspannung steht an einem Reglerausgang 7 (VPS) zur Verfügung. Die Glättungskondensatoren 5 dienen auch als Speicherkondensatoren, da in ihnen die elektrische Energie gespeichert ist, mit der bei einem Netzausfall das Netzteil noch für eine bestimmte Zeit weiter betrieben werden kann.

Das Netzteil enthält eine zweite integrierte Schaltung 8 zur Erzeugung eines Netzunterbruchsignales an einem Signalausgang 9 (NU). Die zweite integrierte Schaltung 8 dient der Detektion von langdauernden Netzausfällen aufgrund der Ueberwachung der ungeregelten Gleichspannung durch Vergleich derselben mit einer konstanten Referenzspannung. Als Referenzspannung wird die Ausgangsgleichspannung verwendet, die von der ersten integrierten Schaltung 6 konstant gehalten ist. Die ungeregelte Gleichspannung wird der zweiten integrierten Schaltung 8 über einen aus zwei Widerständen 10, 11 bestehenden Spannungsteiler zum Vergleich mit der Ausgangsgleichspannung zugeführt. Die zweite integrierte Schaltung 8 ist ein Komparator, der mit einer Beschaltung zur Erzeugung einer Schalthysterese mit zwei unterschiedlichen Schaltschwellen versehen ist, um die Zuverlässigkeit der Erzeugung des Netzunterbruchsignales im Falle von überlagerten Störsignalen auf der ungeregelten Gleichspannung zu gewährleisten.

Die erste integrierte Schaltung 6 ist beispielsweise ein "three-terminal adjustable positive voltage regulator" des Typs LM117L, LM217L oder LM317L von Motorola. Die zweite integrierte Schaltung 8 ist beispielsweise ein "low power low offset voltage dual comparator" des Typs LM193, LM293 oder LM393 von National Semiconductor. Beide werden zur Erzielung der erwähnten Funktionen im wesentlichen in einer von den Herstellern gemäss Datenblatt vorgeschlagenen typischen Beschaltung betrieben.

Die ungeregelte Gleichspannung ist im Normalbetrieb der ersten integrierten Schaltung 6 um einiges höher als die Ausgangsgleichspannung. Im Falle eines Netzunterbruches sinkt die ungeregelte Gleichspannung mit zunehmender Entladung der Glättungskondensatoren 5 langsam ab, bis eine geringfügig über der Ausgangsgleichspannung liegende Schwelle erreicht wird, unterhalb deren die Regelungswirkung der ersten integrierten Schaltung 6 zur Konstanthaltung der Ausgangsgleichspannung versagt. Die Entladung der Glättungskondensatoren 5 erfolgt umso schneller, je grösser der Energieverbrauch der am Reglerausgang 7 (VPS) angeschlossenen Mikroprozessorschaltung ist. Bevor die ungeregelte Gleichspannung so weit abgesunken ist, dass die Regelungswirkung der ersten integrierten Schaltung 6 versagt, wird das Netzunterbruchsignal erzeugt. Damit wird sichergestellt, dass das Netzteil nach der Ausgabe des Netzunterbruchsignales noch für eine kurze Zeit die stabilisierte Ausgangsgleichspannung zur Verfügung stellt, um so die Betriebsdaten im Arbeitsspeicher des Mikroprozessors noch vor dem Zusammenbruch der Ausgangsgleichspannung in EEPROMs zu speichern. Der Komparator der zweiten integrierten Schaltung 8 vergleicht zu diesem Zweck dauernd die über die Widerstände 10 und 11 einem ersten Komparatoreingang 12 zugeführte ungeregelte Gleichspannung mit der der Ausgangsgleichspannung entsprechenden, an einem zweiten Komparatoreingang 13 anstehenden Referenzspannung. Sinkt die ungeregelte Gleichspannung unter einen von der Referenzspannung und der Beschaltung des Komparators vorgegebenen Schaltpunkt, so wird das Netzunterbruchsignal erzeugt. Um sicherzustellen, dass der Komparator wegen allfälligen, der ungeregelten Gleichspannung überlagerten Störspitzen nicht unkontrolliert hin- und herschaltet, dient die Schalthysterese.

Eine so ausgeführte Schaltung weist gegenüber der bekannten Schaltung mit einer einzigen integrierten Schaltung eine erheblich höhere EMV-Sicherheit auf. Wegen der separaten Beschaltung der zweiten integrierten Schaltung 8 können die Arbeitsströme in den Schaltungszweigen zur Bemessung des Schaltpunktes und die Widerstände 10, 11 so gewählt werden, dass sie wesentlich über denjenigen liegen, die durch überlagerte Störsignale hervorgerufen werden. Auf diese Weise wird der Einfluss der Störsignale gegenüber dem Einfluss der Nutzsignale erheblich vermindert.

## Patentansprüche

1. Netzteil mit einer Ueberwachungsschaltung zur Detektion von langdauernden Netzausfällen, mit einem Netztransformator (2) und einem Gleichrichter (1) zur Erzeugung einer ungeregelten Gleichspannung und mit einer Schaltung zur Erzeugung und Regelung einer Ausgangsgleichspannung sowie zur Erzeugung eines Netzunterbruchsignales bei einem langdauernden Netzausfall, **dadurch gekennzeichnet, dass** die Schaltung eine erste integrierte Schaltung (6) zur Erzeugung und Regelung der Ausgangsgleichspannung und eine zweite integrierte Schaltung (8) zur Erzeugung des Netzunterbruchsignales bei der Detektion eines langdauernden Netzausfalles aufgrund der Ueberwachung der ungeregelten Gleichspannung durch Vergleich mit einer Referenzspannung umfasst.

2. Netzteil nach Anspruch 1, **dadurch gekennzeichnet, dass** die Referenzspannung von der Ausgangsgleichspannung abgeleitet ist.

3. Netzteil nach Anspruch 1 oder 2, **dadurch gekennzeichnet, dass** die zweite integrierte Schaltung (8) ein Komparator mit Hysterese ist.

4. Netzteil nach einem der Ansprüche 1 bis 3, **dadurch gekennzeichnet, dass** die ungeregelte Gleichspannung der zweiten integrierten Schaltung (8) über einen Spannungsteiler zugeführt wird.
